# EUROPEAN PATENT APPLICATION

(11) **EP 4 708 208 A1**
(43) Date of publication of application: **11.03.2026**
(21) Application number: 24815784.4
(22) Date of filing: 23.05.2024
(51) Int. Cl.: G06T 19/00, G06F 3/14, G06T 19/20, G06T 15/20, G06F 1/16, H04M 1/02, G06T 7/70, G06F 3/048

(54) **ELECTRONIC DEVICE AND VIRTUAL IMAGE PROVIDING METHOD FOR ELECTRONIC DEVICE**

(30) Priority: 30.05.2023 KR 20230069416; 12.07.2023 KR 20230090136
(71) Applicant: Samsung Electronics Co., Ltd., Suwon-si, Gyeonggi-do 16677 (KR)
(72) Inventor: KIM, Sooryuh, Suwon-si, Gyeonggi-do 16677 (KR); KIM, Sanggeon, Suwon-si, Gyeonggi-do 16677 (KR); KIM, Heewoong, Suwon-si, Gyeonggi-do 16677 (KR); PARK, Jeongmin, Suwon-si, Gyeonggi-do 16677 (KR); CHUNG, Miyeoung, Suwon-si, Gyeonggi-do 16677 (KR)
(74) Representative: Appleyard Lees IP LLP
(86) International application number: PCT/KR2024/007007
(87) International publication number: WO 2024/248408

(57) **Abstract**

An electronic device according to various embodiments of the present document may comprise: a display for outputting a virtual image; a camera for acquiring a reality image including an external subject; a communication circuit; and a processor operatively connected to the display, the camera, and the communication circuit. The processor may be configured to recognize a foldable device on the basis of at least one of the reality image acquired by the camera and including the external foldable device, or a signal received from the foldable device through the communication circuit. The processor may be configured to receive folding angle information of the foldable device from the foldable device through the communication circuit, determine visual characteristics of at least one virtual object constituting the virtual image on the basis of the received folding angle information, render the virtual image including the at least one virtual object to which the determined visual characteristics have been reflected, and output the rendered virtual image through the display. Various other embodiments are possible.

## Description

### [Technical Field]

The disclosure relates to an electronic device, for example, a method for providing virtual images in a wearable electronic device capable of providing a visual virtual environment when worn on a user.

### [Background Art]

Various technologies are being developed to provide users with virtual environments, such as virtual reality (VR), augmented reality (AR), mixed reality (MR), or extended reality (XR). These virtual environments may be provided by wearable devices capable of being worn on a user's body, such as head-mounted devices or glasses-type devices (e.g., AR glasses). Virtual images provided by wearable devices may include various virtual objects.

Foldable devices may include a structure having a flexible display mounted thereto, allowing the entire device to be folded. The angle between the displays facing each other in the foldable device may be changed according to a user's manipulation, and the device may be configured in a fully folded state, an intermediate state, or a fully unfolded state.

### [Disclosure of Invention]

### [Technical Problem]

When a wearable device provides a virtual image including various virtual objects, the user may wish to change the position, size, and angle of the virtual objects. For example, the wearable device may detect the movement of a user's body part (e.g., a finger) and control the virtual object in response to the movement. Such movement detection may be inaccurate, and may restrict the control actions that may be mapped to the user's movements, thereby hindering smooth control of the virtual object in a manner consistent with the user's actual intentions.

### [Solution to Problem]

An electronic device according to various embodiments of the disclosure (or specification or invention) may include a display configured to output a virtual image, a camera configured to acquire a reality image including an external subject, a communication circuit, and a processor operatively connected to the display, the camera, and the communication circuit.

According to an embodiment, the processor may be configured to recognize an external foldable device, based on at least one of a reality image including the foldable device and acquired by the camera or a signal received from the foldable device through the communication circuit.

According to an embodiment, the processor may be configured to receive folding angle information of the foldable device from the foldable device through the communication circuit, determine visual characteristics of at least one virtual object constituting the virtual image, based on the received folding angle information, and render the virtual image including the at least one virtual object reflecting the determined visual characteristics, thereby outputting the rendered virtual image through the display.

A method for providing a virtual image for an electronic device according to various embodiments of the disclosure may include recognizing an external foldable device, based on at least one of a reality image including the foldable device and acquired by a camera or a signal received from the foldable device, receiving folding angle information of the foldable device from the foldable device, determining visual characteristics of at least one virtual object constituting the virtual image, based on the received folding angle information, and rendering the virtual image including the at least one virtual object reflecting the determined visual characteristics and outputting the rendered virtual image.

### [Advantageous Effects of Invention]

According to various embodiments of this document, it is possible to provide an electronic device capable of rendering a virtual image and adjusting visual characteristics of a virtual object included in the virtual image, based on a location and/or folding angle of an adjacent foldable device, and a method for providing a virtual image of the electronic device.

### [Brief Description of Drawings]

FIG. 1 is a block diagram of an electronic device in a network environment according to various embodiments.
FIG. 2 is a perspective view of a wearable device according to various embodiments.
FIG. 3 illustrates a wearable device and a foldable device according to various embodiments.
FIG. 4 illustrates a virtual desk workspace provided by a wearable device according to various embodiments.
FIG. 5 is a block diagram of a wearable device according to various embodiments.
FIG. 6 is a flowchart illustrating a method for rendering a virtual image of a wearable device according to an embodiment.
FIG. 7 is a flowchart illustrating a method for configuring a virtual image using information about a foldable device by a wearable device according to an embodiment.
FIG. 8 is a flowchart illustrating a method for providing a virtual image of a wearable device and a foldable device according to an embodiment.
FIG. 9 illustrates an example of a wearable device controlling the angle of a virtual image in accordance with the folding angle of a foldable device according to an embodiment.
FIG. 10 illustrates an example of a wearable device controlling the size of a virtual image in accordance with the folding angle of a foldable device according to an embodiment.
FIG. 11 illustrates an example of a wearable device controlling the distance of a virtual image in accordance with the folding angle of a foldable device according to an embodiment.
FIG. 12 illustrates an example of a wearable device configuring the position coordinates of a virtual object in accordance with the folding angle of a foldable device according to an embodiment.
FIG. 13 is a flowchart illustrating a method for a wearable device to determine a virtual object to be controlled according to an embodiment.
FIG. 14 illustrates an example of a wearable device controlling a virtual object in accordance with the folding angle of a foldable device according to an embodiment.
FIG. 15 illustrates an example of a wearable device controlling a virtual object in accordance with the folding angle of a foldable device according to an embodiment.
FIG. 16 illustrates an example of a wearable device controlling a virtual object in accordance with the folding angle of a foldable device according to an embodiment.
FIG. 17 illustrates an example of a wearable device controlling a grid including a virtual object in accordance with the folding angle of a foldable device according to an embodiment.
FIG. 18 illustrates an example of a wearable device configuring a grid including a virtual object in accordance with the orientation of a foldable device according to an embodiment.

### [Mode for the Invention]

Hereinafter, embodiments of the disclosure will be described in detail with reference to the drawings so that those skilled in the art to which the disclosure pertains can easily implement the disclosure. However, the disclosure may be implemented in various different forms and is not limited to embodiments set forth herein. With regard to the description of the drawings, the same or like reference signs may be used to designate the same or like elements. Also, in the drawings and the relevant descriptions, description of well-known functions and configurations may be omitted for the sake of clarity and brevity.

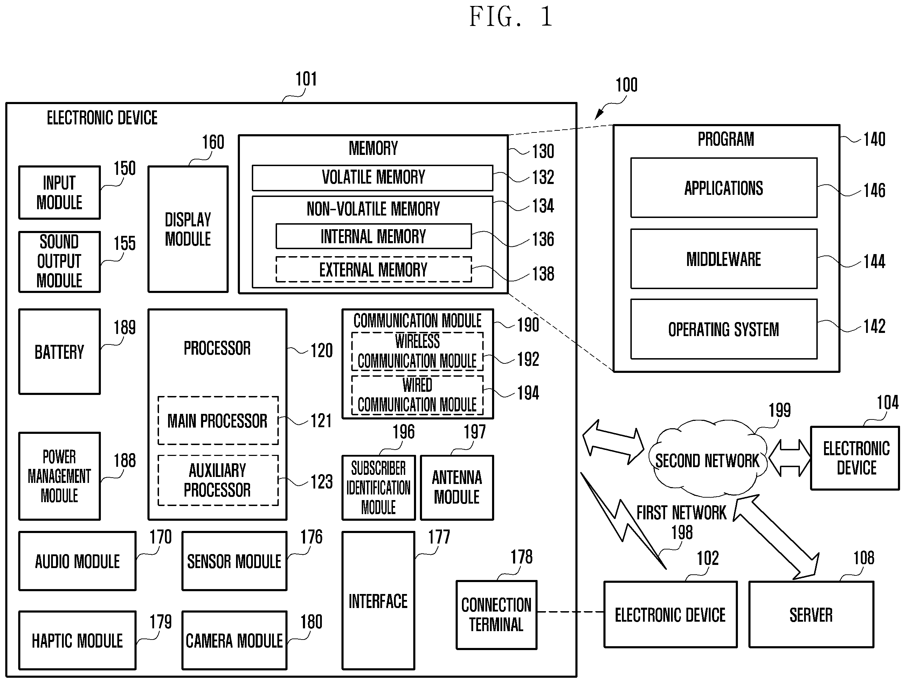

Fig. 1 is a block diagram illustrating an electronic device in a network environment according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

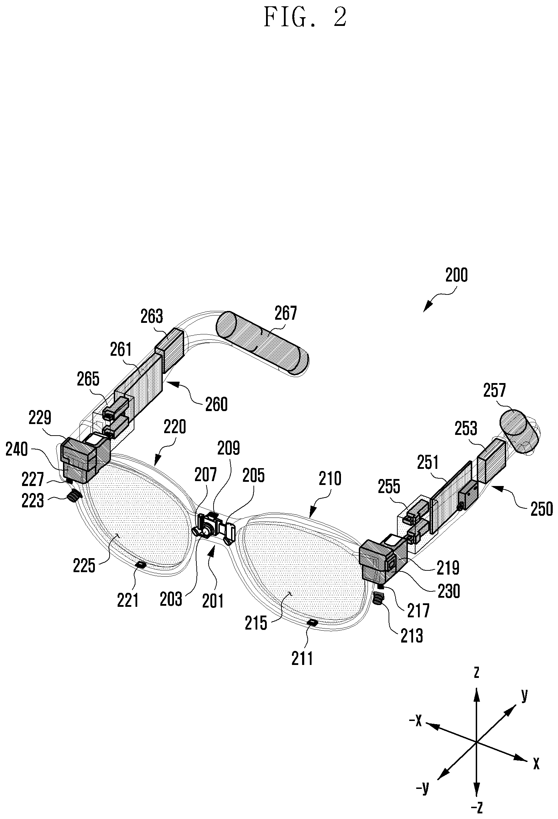

FIG. 2 is a perspective view of a wearable device according to various embodiments.

Although FIG. 2 describes the structure of a glasses-type wearable device (e.g., AR glasses or smart glasses), the wearable device according to various embodiments of the disclosure may be implemented as another type of wearable device capable of being worn by a user and providing a virtual environment, such as virtual reality (VR), augmented reality (AR), mixed reality (MR), or extended reality (XR), when worn by the user. A wearable device 200 may further include at least some of the configurations and/or functions of the wearable device 101 in FIG. 1. Hereinafter, the wearable device may also be referred to as an electronic device or a wearable electronic device.

Referring to FIG. 2, a wearable device 200 according to various embodiments may include a bridge 201, a first rim 210, a second rim 220, a first end piece 230, a second end piece 240, a first temple 250, and/or a second temple 260.

According to an embodiment, the bridge 201 may connect the first rim 210 and the second rim 220. The bridge 201 may be placed on the user's nose when the user wears the wearable device 200. The bridge 201 may separate the first rim 210 and the second rim 220 based on the user's nose.

According to various embodiments, the bridge 201 may include a camera module 203, a first eye-tracking camera 205, a second eye-tracking camera 207, and/or an audio module 209.

According to various embodiments, the camera module 203 (e.g., the camera module 180 in FIG. 1) may capture the scene in front of the user (e.g., in the -y-axis direction) and acquire image data. The camera module 203 may capture images corresponding to the user's field of view (FOV) or measure the distance to a subject. The camera module 203 may include an RGB camera, a high-resolution (HR) camera, and/or a photo video (PV) camera. The camera module 203 may include a color camera with an auto focus (AF) function and an optical image stabilization (OIS) function to capture high-quality images.

According to various embodiments, the first eye-tracking camera 205 and the second eye-tracking camera 207 may identify the user's gaze. The first eye-tracking camera 205 and the second eye-tracking camera 207 may capture the user's pupils in a direction (e.g., the y-direction) substantially opposite the capturing direction of the camera module 203. For example, the first eye-tracking camera 205 may capture at least a portion of the user's left eye, and the second eye-tracking camera 207 may capture at least a portion of the user's right eye. The first eye-tracking camera 205 and the second eye-tracking camera 207 may detect the user's pupils (e.g., the left eye and the right eye) and track the gaze direction. The tracked gaze direction may be utilized for the center of a virtual image including a virtual object to move in response to the gaze direction. The first eye-tracking camera 205 and/or the second eye-tracking camera 207 may track the user's gaze using, for example, at least one of an electro-oculography or electrooculogram (EOG) sensor, a coil system, a dual Purkinje system, bright pupil systems, or dark pupil systems.

According to various embodiments, the audio module 209 (e.g., the audio module 170 in FIG. 1) may be positioned between the first eye-tracking camera 205 and the second eye-tracking camera 207. The audio module 209 may convert the user's voice and/or external sound into an electrical signal, or convert the electrical signal into sound. The audio module 209 may include a microphone.

According to an embodiment, the first rim 210 and the second rim 220 may form a frame of the wearable device 200 (e.g., a frame of AR glasses). The first rim 210 may be disposed in a first direction (e.g., the x-axis direction) of the bridge 201. The first rim 210 may be disposed at a position corresponding to the user's left eye. The second rim 220 may be disposed in a second direction (e.g., the -x-axis direction) of the bridge 201, which is substantially opposite the first direction (e.g., the x-axis direction). The second rim 220 may be disposed at a position corresponding to the user's right eye. The first rim 210 and the second rim 220 may be formed of a metal material and/or a non-conductive material (e.g., polymer).

According to various embodiments, the first rim 210 may surround and support at least a portion of a first glass member 215 disposed on the inner circumference. The first glass member 215 may be positioned in front of the user's left eye. The second rim 220 may surround and support at least a portion of a second glass member 225 disposed on the inner circumference. The second glass member 225 may be disposed in front of the user's right eye. The user of the wearable device 200 may view a foreground (e.g., a real image or real information) of external objects through the first glass member 215 and the second glass member 225. The wearable device 200 may display a virtual image to be overlaid onto the real information including the external objects, thereby implementing augmented reality.

According to various embodiments, the first glass member 215 and the second glass member 225 may include a projection-type transparent display. The first glass member 215 and the second glass member 225 may each form a reflective surface as a transparent plate (or transparent screen), and the image generated by the wearable device 200 may be reflected (e.g., total internal reflection) from the reflective surface and incident on the user's left and/or right eye.

According to various embodiments, the first glass member 215 may include a waveguide (or optical waveguide) that transmits light generated from a light source (not shown) of the wearable device 200 to the user's left eye. For example, the waveguide may be formed of glass, plastic, or a polymer material, and may include a nano-pattern (e.g., a polygonal or curved grating structure or mesh structure) formed on the interior or surface of the first glass member 215. The waveguide may include at least one diffractive element (e.g., a diffractive optical element (DOE) or a holographic optical element (HOE)) or at least one reflective element (e.g., a reflective mirror). The waveguide may guide display light emitted from a light source toward the user's eye using at least one diffractive element or reflective element included in the waveguide. In various embodiments, the diffractive element may include an input/output optical element, and the reflective element may include a total internal reflection (TIR) element. For example, light emitted from a light source may be guided to the waveguide via an input optical element (e.g., an in-coupler), and light traveling within the waveguide may be guided toward the user's eye via an output optical element (e.g., an out-coupler).

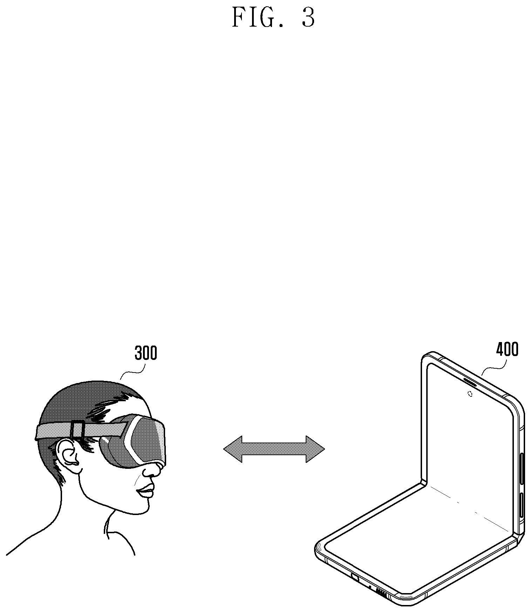

The second glass member 225 may be implemented in substantially the same configuration as the first glass member 215. The light path formed through the waveguide of the first glass member 215 and the second glass member 225 will be described in more detail with reference to FIG. 3.

According to various embodiments, the first glass member 215 and the second glass member 225 may include, for example, a liquid crystal display (LCD), a digital mirror device (DMD), a liquid crystal-on-silicon (LCoS), a light-emitting diode (LED)-on-silicon (LEDoS), an organic light-emitting diode (OLED), an organic light-emitting diode-on-silicon (OLEDoS), or a micro light-emitting diode (micro LED). Although not shown, when the first glass member 215 and the second glass member 225 are configured as one of the liquid crystal display, the digital mirror display, or the liquid crystal-on-silicon, the wearable device 200 may include a light source that emits light onto the screen output areas of the first glass member 215 and the second glass member 225. In another embodiment, in the case where the first glass member 215 and the second glass member 225 are capable of generating light on their own, for example, when they are configured as the organic light-emitting diode or micro LED, the wearable device 200 may provide a relatively high-quality virtual image to the user even without a separate light source.

According to various embodiments, the first rim 210 may include a first microphone 211, a first recognition camera 213, a first light-emitting device 217, and/or a first display module 219. The second rim 220 may include a second microphone 221, a second recognition camera 223, a second light-emitting device 227, and/or a second display module 229.

In various embodiments, the first light-emitting device 217 and the first display module 219 may be included in the first end piece 230, and the second light-emitting device 227 and the second display module 229 may be included in the second end piece 240.

According to various embodiments, the first microphone 211 and/or the second microphone 221 may receive the voice of the user of the wearable device 200 and/or external sound and convert the same into electrical signals.

According to various embodiments, the first recognition camera 213 and/or the second recognition camera 223 may recognize the surrounding space of the wearable device 200. The first recognition camera 213 and/or the second recognition camera 223 may detect a user's gesture within a predetermined distance (e.g., a predetermined space) of the wearable device 200. The first recognition camera 213 and/or the second recognition camera 223 may include a global shutter (GS) camera capable of reducing the rolling shutter (RS) phenomenon to detect and track the user's rapid hand movements and/or subtle finger movements. The wearable device 200 may detect the eye corresponding to the dominant eye and/or the auxiliary eye from the user's left and/or right eyes using the first eye-tracking camera 205, the second eye-tracking camera 207, the first recognition camera 213, and/or the second recognition camera 223. For example, the wearable device 200 may detect the eye corresponding to the dominant eye and/or the auxiliary eye, based on the user's gaze direction toward an external object or virtual object.

According to various embodiments, the first light-emitting device 217 and/or the second light-emitting device 227 may emit light to enhance the accuracy of the camera module 203, the first eye-tracking camera 205, the second eye-tracking camera 207, the first recognition camera 213, and/or the second recognition camera 223. The first light-emitting device 217 and/or the second light-emitting device 227 may be used as an auxiliary means to enhance the accuracy when capturing the user's pupils using the first eye-tracking camera 205 and/or the second eye-tracking camera 207. The first light-emitting device 217 and/or the second light-emitting device 227 may be used as auxiliary means when capturing a user's gesture using the first recognition camera 213 and/or the second recognition camera 223 in the case where it is difficult to detect an object (e.g., a subject) to be captured in a dark environment or due to mixed or reflected light from multiple light sources. The first light-emitting device 217 and/or the second light-emitting device 227 may include, for example, an LED, an IR LED, or a xenon lamp.

According to various embodiments, the first display module 219 and/or the second display module 229 may emit light and transmit the light to the user's left and/or right eyes using the first glass member 215 and/or the second glass member 225. The first glass member 215 and/or the second glass member 225 may display various image information using light emitted through the first display module 219 and/or the second display module 229. The wearable device 200 may display, through the first glass member 215 and/or the second glass member 225, an image emitted through the first display module 219 and/or the second display module 229 to be overlaid onto the foreground of external objects.

According to an embodiment, the first end piece 230 may be coupled to a portion of the first rim 210 (e.g., in the x-axis direction). The second end piece 240 may be coupled to a portion of the second rim 220 (e.g., in the -x-axis direction). In various embodiments, the first light-emitting device 217 and the first display module 219 may be included in the first end piece 230. The second light-emitting device 227 and the second display module 229 may be included in the second end piece 240.

According to various embodiments, the first end piece 230 may connect the first rim 210 and the first temple 250. The second end piece 240 may connect the second rim 220 and the second temple 260.

According to an embodiment, the first temple 250 may be operatively connected to the first end piece 230 using a first hinge portion 255. The first hinge portion 255 may be configured to be rotatable so that the first temple 250 folds or unfolds relative to the first rim 210. The first temple 250 may extend, for example, along the left side of the user's head. The distal end of the first temple 250 (e.g., in the y-axis direction) may be configured such that at least a portion thereof is bent so as to be supported by, for example, at least a portion of the user's left ear when the user wears the wearable device 200. The second temple 260 may be operatively connected to the second end piece 240 using a second hinge portion 265. The second hinge portion 265 may be configured to be rotatable so that the second temple 260 folds or unfolds relative to the second rim 220. The second temple 260 may extend, for example, along the right side of the user's head. The distal end of the second temple 260 (e.g., in the y-axis direction) may be configured such that at least a portion thereof is bent so as to be supported by, for example, at least a portion of the user's right ear when the user wears the wearable device 200.

According to various embodiments, the first temple 250 may include a first printed circuit board 251, a first audio output module 253 (e.g., the audio output module 155 in FIG. 1), and/or a first battery 257 (e.g., the battery 189 in FIG. 1). The second temple 260 may include a second printed circuit board 261, a second audio output module 263 (e.g., the audio output module 155 in FIG. 1), and/or a second battery 267 (e.g., the battery 189 in FIG. 1).

According to various embodiments, various electronic components (e.g., at least some of the components included in the electronic device 101 in FIG. 1), such as the processor 120, the memory 130, the interface 177, and/or wireless communication module 192 disclosed in FIG. 1, may be disposed on the first printed circuit board 251 and/or the second printed circuit board 261. The processor may include, for example, one or more of a central processing unit, an application processor, a graphics processing unit, an image signal processor, a sensor hub processor, or a communication processor. The first printed circuit board 251 and/or the second printed circuit board 261 may include, for example, a printed circuit board (PCB), a flexible PCB (FPCB), or a rigid-flexible PCB (RFPCB). In some embodiments, the first printed circuit board 251 and/or the second printed circuit board 261 may include a primary PCB, a secondary PCB disposed to partially overlap the primary PCB, and/or an interposer substrate between the primary PCB and the secondary PCB. The first printed circuit board 251 and/or the second printed circuit board 261 may be electrically connected to other components (e.g., the camera module 203, the first eye-tracking camera 205, the second eye-tracking camera 207, the audio module 209, the first microphone 211, the first recognition camera 213, the first light-emitting device 217, the first display module 219, the second microphone 221, the second recognition camera 223, the second light-emitting device 227, the second display module 229, the first audio output module 253, and/or the second audio output module 263) using electrical paths such as FPCBs and/or cables. For example, the FPCBs and/or cables may be disposed on at least a portion of the first rim 210, the bridge 201 and/or the second rim 220. In some embodiments, the wearable device 200 may include only one of the first printed circuit board 251 or the second printed circuit board 261.

According to various embodiments, the first audio output module 253 and/or the second audio output module 263 may transmit audio signals to the left and/or right ear of the user. The first audio output module 253 and/or the second audio output module 263 may include, for example, a piezo speaker (e.g., a bone conduction speaker) that transmits audio signals without a speaker hole. In some embodiments, the wearable device 200 may include only one of the first audio output module 253 or the second audio output module 263.

According to various embodiments, the first battery 257 and/or the second battery 267 may supply power to the first printed circuit board 251 and/or the second printed circuit board 261 using a power management module (e.g., the power management module 188 in FIG. 1). The first battery 257 and/or the second battery 267 may include, for example, a non-rechargeable primary battery, a rechargeable secondary battery, or a fuel cell. In some embodiments, the wearable device 200 may include only one of the first battery 257 or the second battery 267.

According to various embodiments, the wearable device 200 may include a sensor module (e.g., the sensor module 176 in FIG. 1). The sensor module may generate electrical signals or data values corresponding to the internal operating state of the wearable device 200 or the external environmental state. The sensor module may further include, for example, at least one of a gesture sensor, a gyro sensor, a barometric pressure sensor, a magnetic sensor, an acceleration sensor, a grip sensor, a color sensor, an infrared (IR) sensor, a biometric sensor (e.g., an HRM sensor), a temperature sensor, a humidity sensor, or an illuminance sensor. In some embodiments, the sensor module may recognize a user's biometric information using various biometric sensors (or biometric recognition sensors), such as an e-nose sensor, an electromyography (EMG) sensor, an electroencephalogram (EEG) sensor, an electrocardiogram (ECG) sensor, or an iris sensor.

FIG. 3 illustrates a wearable device and a foldable device according to various embodiments.

According to an embodiment, a wearable device 300 (e.g., the wearable device 200 in FIG. 2) may be a device capable of being worn on the user's body, for example, on a portion of the head. The wearable device 300 may be a head-mounted device or glasses-type device, but is not limited thereto.

According to an embodiment, the wearable device 300 may generate a virtual image constituting a virtual environment and provide it to the user. For example, the virtual environment provided by the wearable device 300 may include, but is not limited to, any of virtual reality (VR), augmented reality (AR), mixed reality (MR), or extended reality (XR). The wearable device 300 may store data (e.g., virtual objects) for implementing the virtual image in a memory, receive it from an external server via a network, and/or acquire it from another electronic device (e.g., a foldable device 400) of the user via short-range wireless communication.

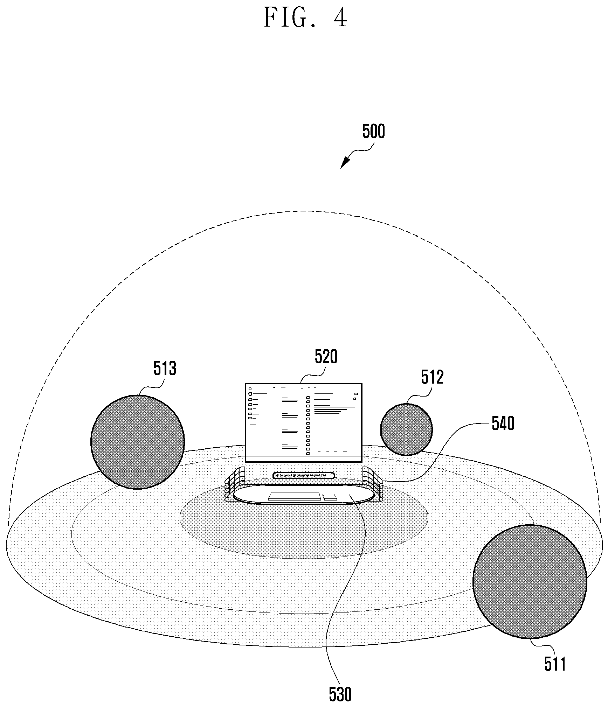

Although the types of virtual environments that may be provided through the wearable device 300 are not limited, they may include, for example, a virtual desk workspace, which will be described below with reference to FIG. 4.

According to an embodiment, the foldable device 400 may be a device, such as a smartphone or tablet PC, equipped with wireless communication capabilities and capable of executing various applications. The foldable device 400 may be folded based on a folding axis. For example, a flexible display of the foldable device 400 may include a first area and a second area, which are divided based on the folding axis, so that both the first area and the second area are exposed to the outside in an unfolded state and the first area and the second area face each other in a folded state. The first area of the flexible display may be disposed on a first housing, and the second area may be disposed on a second housing, and the first and second housings may be connected to be rotatable via a hinge structure.

The foldable device 400 may be folded or unfolded by a user's manipulation, so that the folding angle, which is the angle between the first area and the second area of the flexible display, may change. The foldable device 400 may include an angle sensor for detecting the folding angle. The foldable device 400 may be fixed to maintain an angle corresponding to at least a portion of an intermediate state between the folded state and the unfolded state (e.g., a state where the angle between the first area and the second area is between 0 and 180 degrees), such as in flex mode.

Although FIG. 3 illustrates a foldable device 400 with a foldable display, the foldable device 400 described herein is not limited thereto, and for example, a device including two displays that are physically separated in the areas divided by a folding axis or a device without a display may also be employed as the foldable device 400 described herein.

According to an embodiment, the wearable device 300 and the foldable device 400 may be wirelessly connected to each other via short-range wireless communication (e.g., Bluetooth or Wi-Fi) to transmit and receive various data. For example, the foldable device 400 may transmit folding angle information (e.g., the angle between the first and second areas of the flexible display) to the wearable device 300 via short-range wireless communication.

According to an embodiment, when providing a virtual image that implements a virtual environment, the wearable device 300 may determine the visual characteristics of at least one virtual object included in the virtual image, based on the location and/or folding angle information of the foldable device 400. For example, the wearable device 300 may change the size, distance, and/or angle of a specific virtual object, based on changes in the folding angle of the foldable device 400.

Hereinafter, various embodiments in which the wearable device 300 renders a virtual image and adjusts the visual characteristics of a virtual object included in the virtual image, based on the location and/or folding angle of an adjacent foldable device 400, will be described.

FIG. 4 illustrates a virtual desk workspace provided by a wearable device according to various embodiments.

According to an embodiment, a wearable device (e.g., the wearable device 300 in FIG. 3) may generate a virtual image constituting a virtual environment and provide it to a user. For example, the virtual environment provided by the wearable device may include, but is not limited to, any one of virtual reality (VR), augmented reality (AR), mixed reality (MR), or extended reality (XR).

FIG. 4 illustrates a virtual desk workspace 500, which is an example of various virtual environments that may be provided through a wearable device. Referring to FIG. 4, the virtual desk workspace 500 may include a UX screen 520, a virtual desk 530, a task board 540, and virtual objects 511, 512, and 513. Here, the UX screen 520 may include a screen that displays work content such as a TV or a monitor in a real environment. The virtual desk 530 may provide the user with a sense of being seated at a desk and performing work tasks. The task board 540 may be configured to allow the user to record work-related information.

According to an embodiment, the virtual image may include one or more virtual objects 511, 512, and 513. The wearable device may generate virtual objects 511, 512, and 513 and determine their positions, based on user input (e.g., changes in gaze direction, changes in hand position and/or shape, or voice input). For example, virtual objects 511, 512, and 513 may include images having the shapes of real objects, widgets (e.g., weather, calendar, and clock), avatars, etc., but their types are not limited. The user may arrange the virtual objects 511, 512, and 513 throughout the space, place them on the desk 530, or attach them to the task board 540 in the virtual environment.

According to an embodiment, when providing a virtual image that implements a virtual environment, the wearable device may determine the visual characteristics of at least one virtual object 511, 512, or 513 included in the virtual image, based on the location and/or folding angle information of a foldable device (e.g., the foldable device 400 in FIG. 3). As illustrated in FIG. 4, when the virtual image includes a plurality of virtual objects, the wearable device may select at least some of the plurality of virtual objects 511, 512, and 513 according to a user input, and determine the visual characteristics of at least one selected virtual object 511, 512, or 513, based on the location and/or folding angle information of the foldable device.

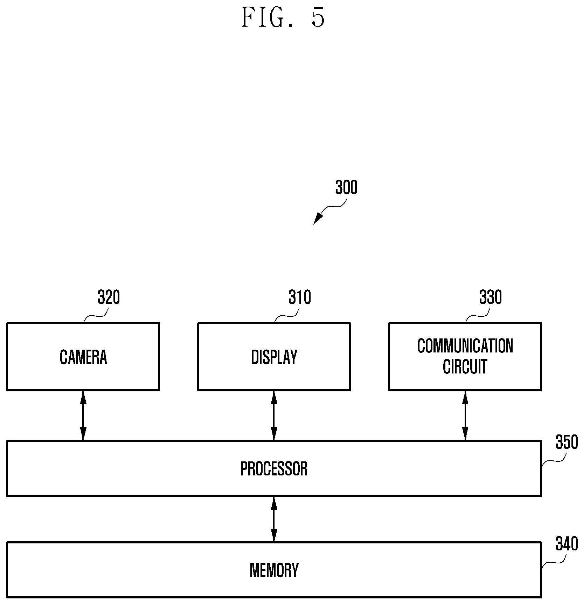

FIG. 5 is a block diagram of a wearable device according to various embodiments.

According to various embodiments, a wearable device 300 may include a camera module 320, a display module 310, a communication module 330, a processor 350, and a memory 340. Even if some of the illustrated components are omitted or replaced, various embodiments of this document may be implemented. At least some of the illustrated components may be operatively, electrically, and/or functionally connected to each other. The wearable device 300 may include at least some of the configurations and/or functions of the electronic device 101 in FIG. 1 and/or the wearable device 200 in FIG. 2.

According to an embodiment, the wearable device 300 may be a glasses-type device 200 having the structure shown in FIG. 2, but is not limited thereto. For example, the wearable device 300 may also be another type of device capable of being worn by the user, such as a head-mounted device.

According to an embodiment, the display module 310 may output light configuring a virtual image. The display module 310 may be an emissive or projector-type display, and may be configured as, but is not limited to, a liquid crystal-on-silicon (LCoS), an organic light-emitting diode (OLED) (or uOLED), a light-emitting diode (LED) (or uLED), or an LED-on-silicon (LEDoS). Light output from the display module 310 may be transmitted through an optical structure so that the virtual image may be recognized in the user's gaze direction.

According to an embodiment, the camera module 320 may include a front camera that captures the scene in front of the user and acquire image data of the real environment, and an eye-tracking camera that tracks the user's gaze position. The front camera may acquire images corresponding to the user's field of view (FOW). The camera module 320 may include, but is not limited to, an RGB camera, a high-resolution (HR) camera, and/or a photo-video (PV) camera. The eye-tracking camera may capture the user's pupils in a direction opposite the capturing direction of the front camera. The processor 350 may identify the user's gaze direction from the pupil image captured by the eye-tracking camera.

According to an embodiment, the communication module 330 may include various hardware and/or software components for communicating with an external device via a wireless communication network. The communication module 330 may include a cellular communication module that supports cellular wireless communication (e.g., 4G or 5G cellular communication) and a short-range wireless communication module that supports short-range wireless communication (e.g., Wi-Fi or Bluetooth). For example, the wearable device 300 may communicate with other electronic devices (e.g., the electronic device 102 or the electronic device 104 in FIG. 1) and/or a server on a network (e.g., the server 108 in FIG. 1) using the cellular wireless communication module or the short-range wireless communication module. According to an embodiment, the wearable device 300 may receive a signal transmitted from an adjacent foldable device via the communication module 330.

According to an embodiment, the memory 340 may include volatile memory and non-volatile memory, and may temporarily or permanently store various data. The memory 340 may include at least some of the configurations and/or functions of the memory 130 in FIG. 1, and may store the program 140 in FIG. 1. The memory 340 may store various instructions that are executable in the processor 350. Such instructions may include control commands, such as arithmetic and logical operations, data transfers, and input/output operations, that may be recognized by the processor 350.

According to an embodiment, the processor 350 is a component capable of performing operations or data processing in relation to control and/or communication of the respective components of the wearable device 300, and may be configured as one or more processors. The processor 350 may include at least some of the configurations and/or functions of the processor 120 in FIG. 1. Although there is no limitation to the computational and data processing functions that the processor 350 may implement on the wearable device 300, this document will describe in detail various embodiments for generating and outputting a virtual image that implements a virtual environment and controlling the visual characteristics of virtual objects included in the virtual image according to the folding angle of the foldable device. The operations of the processor 350 described below may be performed by loading instructions stored in the memory 340.

In this document, a description that the processor 350 (or the wearable device 300) may perform a certain operation (or function, task, or task) may be substantially interpreted to mean that instructions (or commands or computer programs) for causing the wearable device 300 (or the processor 350) to perform the operation are stored in the memory 340 (e.g., non-volatile memory or storage). In addition, a description that the processor 350 may perform a certain operation may be substantially interpreted to mean that at least one processor 350 that is not limited may perform the operation.

According to an embodiment, the wearable device 300 may output a virtual image configuring a virtual environment. For example, the virtual environment provided by the wearable device 300 may include, but is not limited to, any one of virtual reality (VR), augmented reality (AR), mixed reality (MR), or extended reality (XR). The wearable device 300 may store data (e.g., virtual objects) for implementing a virtual image in the memory 340, receive the data from an external server via a network, and/or acquire the data from another electronic device (e.g., a foldable device) of the user via short-range wireless communication. The types of virtual environments that may be provided through the wearable device 300 are not limited, but for example, they may include the virtual desk workspace 500 described with reference to FIG. 4.

According to an embodiment, the processor 350 may generate a virtual image and output it through the display module 310. The display module 310 outputs light configuring the virtual image, and the output light may undergo reflection and/or diffraction processes through an optical structure and then be perceived by the user's eyes.

According to an embodiment, the virtual image may include one or more virtual objects (e.g., the virtual objects 511, 512, and 513 in FIG. 4). For example, the virtual objects may include images having the shapes of real objects, widgets (e.g., weather, calendar, and clock), avatars, etc., but their types are not limited.

According to an embodiment, the processor 350 may recognize an adjacent foldable device. For example, the processor 350 may recognize the foldable device, based on a short-range wireless communication signal transmitted from the foldable device via the communication module 330. Alternatively, the processor 350 may recognize the foldable device through object recognition from an image acquired through the camera module 320.

According to an embodiment, the processor 350 may identify status information of the recognized foldable device. Here, the status information of the foldable device may include location information and folding angle information of the foldable device. According to an embodiment, the processor 350 may recognize the current location of the foldable device and anchor at least one virtual object, based on the recognized location. For example, the processor 350 may anchor at least one virtual object so that the virtual object is recognized adjacent to the foldable device based on the user's gaze.

Furthermore, the processor 350 may determine visual characteristics (e.g., size, distance, and angle) of at least one of the virtual objects, based on folding angle information received from the foldable device.

According to an embodiment, the processor 350 may render a virtual image including the virtual object. For example, the processor 350 may render a virtual image by reflecting the visual characteristics of the virtual object determined based on the status information of the foldable device so as to be recognized by the user's gaze.

According to an embodiment, the processor 350 may receive folding angle information from the foldable device through the communication module 330 while outputting the virtual image through the display module 310. For example, the foldable device may transmit folding angle information to the wearable device 300 in real time (or in a configured cycle), or may transmit folding angle information upon initial connection and then, when the folding angle changes beyond a reference value, transmit the changed folding angle information to the wearable device 300.

According to an embodiment, the processor 350 may determine visual characteristics of at least one virtual object constituting the virtual image, based on the received folding angle information of the foldable device. For example, the visual characteristics may include at least one of the size, position, or angle of the virtual object.

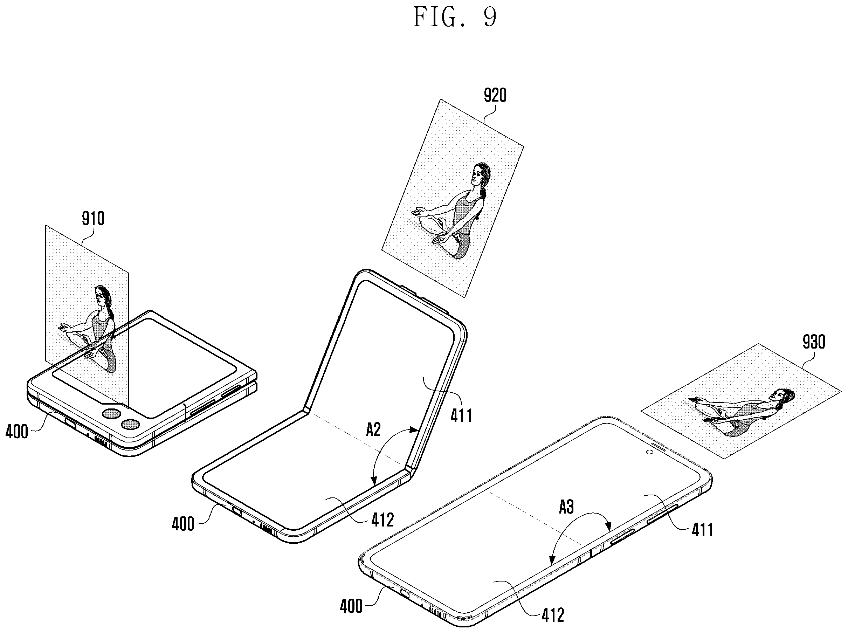

According to an embodiment, the processor 350 may change the angle of the virtual object in response to a change in the folding angle of the foldable device. For example, the processor 350 may change the angle of the virtual object, based on a direction perpendicular to the user's gaze direction, in response to a change in the folding angle. This embodiment will be described in more detail with reference to FIG. 9.

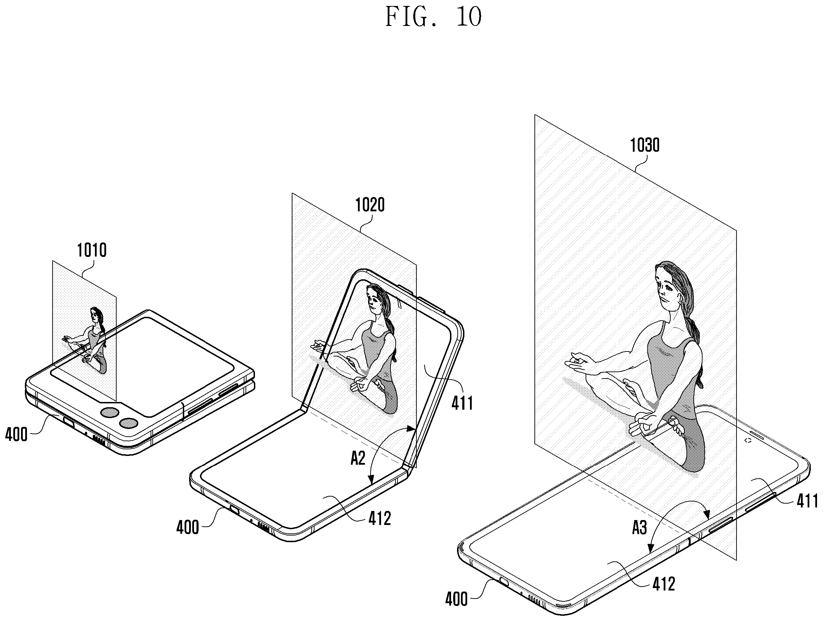

According to an embodiment, the processor 350 may determine the size of a virtual object, based on the folding angle of the foldable device. For example, when the foldable device is in a fully folded state, the size of the virtual object may be determined as a first size, and when the folding angle increases according to a user's manipulation, the size of the virtual object may be changed to a second size, which is larger than the first size. The processor 350 may increase or decrease the size of the virtual object in real time as the folding angle of the foldable device changes according to the user's manipulation. This embodiment will be described in more detail with reference to FIG. 10.

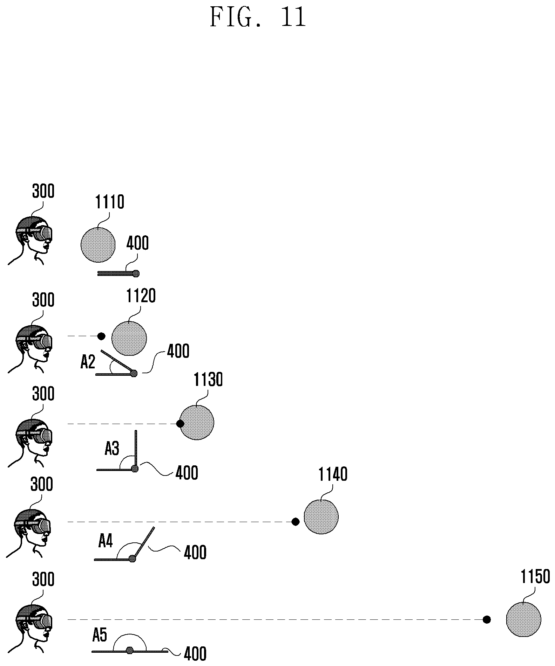

According to an embodiment, the processor 350 may determine the distance of the virtual object, based on the folding angle of the foldable device. When the distance of the virtual object is determined, the processor 350 may render the virtual object so that the virtual object is recognized as being located at the determined distance from the user's gaze. This embodiment will be described in more detail with reference to FIG. 11.

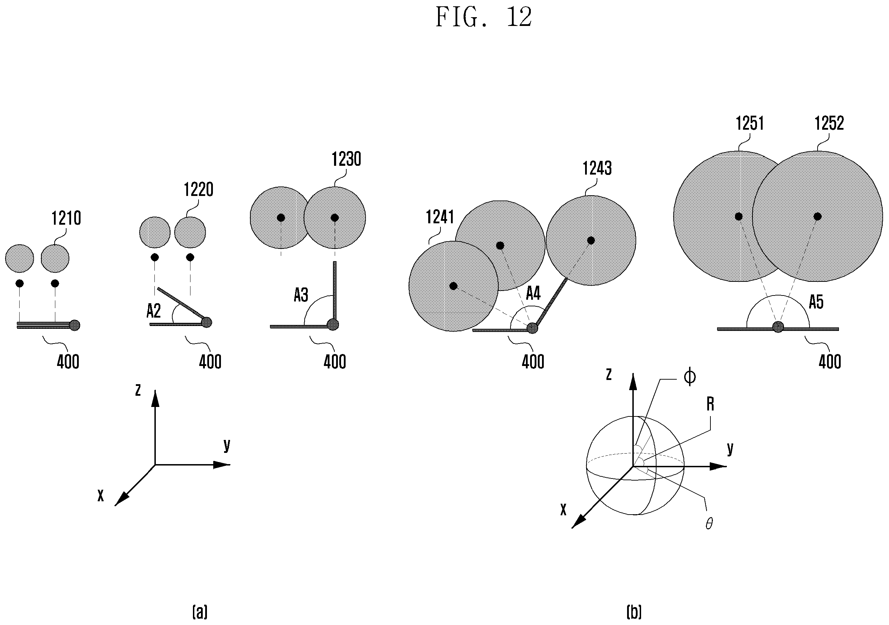

According to an embodiment, the processor 350 may configure a coordinate system that defines the position of a virtual object within virtual space. For example, the coordinate system may include a rectangular coordinate system or a spherical coordinate system, and may include the folding angle of the foldable device and variables (x, y, z) that constitute the rectangular coordinate system or variables (r, φ, θ) that constitute the spherical coordinate system. The processor 350 may use the rectangular coordinate system or the spherical coordinate system depending on the folding angle range of the foldable device. Although this document will describe the wearable device 300 that determines the position coordinates of a virtual object using the rectangular coordinate system (e.g., FIG. 12A) and the spherical coordinate system (e.g., FIG. 12B), the wearable device 300 may also use other coordinate systems, such as a cylindrical coordinate system.

According to an embodiment, the processor 350 may consistently arrange various virtual objects according to a configured coordinate system (e.g., the rectangular coordinate system or the spherical coordinate system). For example, the wearable device 300 may align, based on the recognized location of the foldable device, the virtual objects at configured intervals in directions perpendicular to each other according to the rectangular coordinate system, or arrange them in the shape of a sphere surrounding the user according to the spherical coordinate system.

According to an embodiment, the processor 350 may move the position of a virtual object in the configured coordinate system when the folding angle of the foldable device changes. For example, when the folding angle of the foldable device changes in the state where the rectangular coordinate system is configured, the processor 350 may move the virtual object in the x-, y-, or z-direction, and when the folding angle of the foldable device changes in the state where the spherical coordinate system is configured, the processor 350 may move the virtual object in the r, φ, or θ direction.

According to an embodiment, the processor 350 may determine the position of a virtual object in the rectangular coordinate system in response to the folding angle of the foldable device when the folding angle falls within a first angle range. Here, the first angle range may be, but is not limited to, 0 degrees to 90 degrees. When the folding angle changes within the first angle range, the processor 350 may move the virtual object in a predetermined linear direction (e.g., in the z-direction) within the virtual image in response to the change in the folding angle. Therefore, when the folding angle is increased from the fully folded state, the virtual object may be perceived as moving in an upward direction perpendicular to the user's gaze direction. Alternatively, when the foldable device is used in flex mode at a predetermined angle, the processor 350 may determine the position of the virtual object using the rectangular coordinate system.

According to an embodiment, when the folding angle of the foldable device falls within a second angle range, the processor 350 may determine the position of the virtual object in the spherical coordinate system in response to the folding angle. Here, the second angle range may be 90 degrees to 180 degrees, but is not limited thereto. When the folding angle changes within the second angle range, the processor 350 may move the virtual object in a predetermined curved direction within the virtual image in response to the change in the folding angle. Therefore, when the folding angle of the foldable device increases from flex mode to the fully unfolded state, the virtual object may move away along a circle formed around the foldable device. Since the processor 350 uses the spherical coordinate system, when providing a list of virtual objects, it may configure UI fields that match the shape of the foldable device. This embodiment will be described in more detail with reference to FIG. 12.

According to an embodiment, the processor 350 may determine the number of virtual objects, based on the folding angle of the foldable device. For example, when the virtual image includes a music player application or widget, the virtual image may provide a list of respective tracks as a virtual object. When the folding angle of the foldable device falls within the first angle range (e.g., 0 to 90 degrees), the processor 350 may arrange the respective tracks in the x-, y-, and z-directions in the rectangular coordinate system and, when the folding angle changes, increase the number of tracks provided.

According to an embodiment, the processor 350 may determine the amount of information included in a virtual object, based on the folding angle of the foldable device. For example, when the folding angle of the foldable device increases to the second angle range (e.g., 90 to 180 degrees), the processor 350 may arrange the respective tracks in the spherical coordinate system. In this case, for a virtual object (e.g., a track in the music list) disposed closer to the user (or the foldable device), the title may be displayed in a larger size, and additional information, such as song lyrics, artist information, and image information, may be further displayed.

According to an embodiment, the virtual image may include a single virtual object or a plurality of virtual objects. The number of virtual objects included in the virtual image is not limited.

According to an embodiment, when the virtual image includes a single virtual object, the processor 350 may automatically anchor the virtual object. For example, the wearable device 300 may specify the position of the virtual object so that it is placed adjacent to a specific object in the real environment. In this case, even when the user changes the gaze direction or moves to a different location, the wearable device 300 may render the virtual image so that the virtual object is displayed adjacent to the specific object in the real environment.

According to an embodiment, when the virtual image includes a plurality of virtual objects, the processor 350 may provide a user interface that allows selection of an individual object to be controlled based on the folding angle of the foldable device from among the plurality of virtual objects. For example, the user interface may include an interface that allows selection of at least one virtual object to be controlled in response to manipulation of the foldable device from among the plurality of virtual objects in the virtual image. The user interface may be provided in the form of a cue indicating a specific virtual object or a list of the plurality of virtual objects.

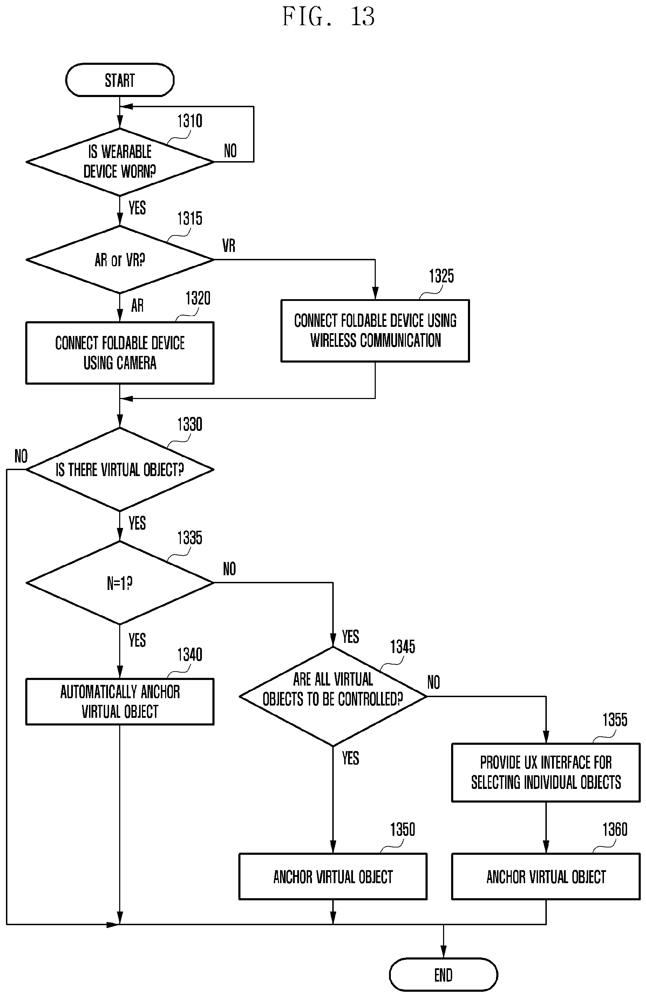

According to an embodiment, the processor 350 may anchor at least one virtual object selected through the user interface. In this case, when the folding angle of the foldable device changes, the visual characteristics of at least one virtual object selected through the user interface may change in response to the change in folding angle. On the other hand, the visual characteristics of at least one virtual object that is not selected may be maintained regardless of the change in folding angle. This embodiment will be described in more detail with reference to FIGS. 13 to 16.

According to an embodiment, the virtual image may include a plurality of virtual objects, and the plurality of virtual objects may be arranged on a single grid. For example, the processor 350 may form a grid parallel to the first area (or the first housing including the first area) of the flexible display of the foldable device. The processor 350 may anchor at least one virtual object on the grid. Respective virtual objects may be disposed parallel to one another on the grid. According to an embodiment, the processor 350 may form the grid as a single plane or curved surface according to a configured coordinate system. For example, when arranging virtual objects using the rectangular coordinate system, the grid may be formed as an x-z plane with a specific y value based on the location of the foldable device (or the user's location), and the grid may be moved in the y-direction when the folding angle of the foldable device changes. Alternatively, when arranging virtual objects using the spherical coordinate system, the grid may be formed as a spherical curved surface with a specific r value based on the location of the foldable device (or the user's location), and the grid may be moved in the direction in which the r value increases when the folding angle of the foldable device changes. In this way, a regular arrangement may be achieved by arranging a plurality of virtual objects on the grid, thereby providing a visual effect and facilitating user operation.

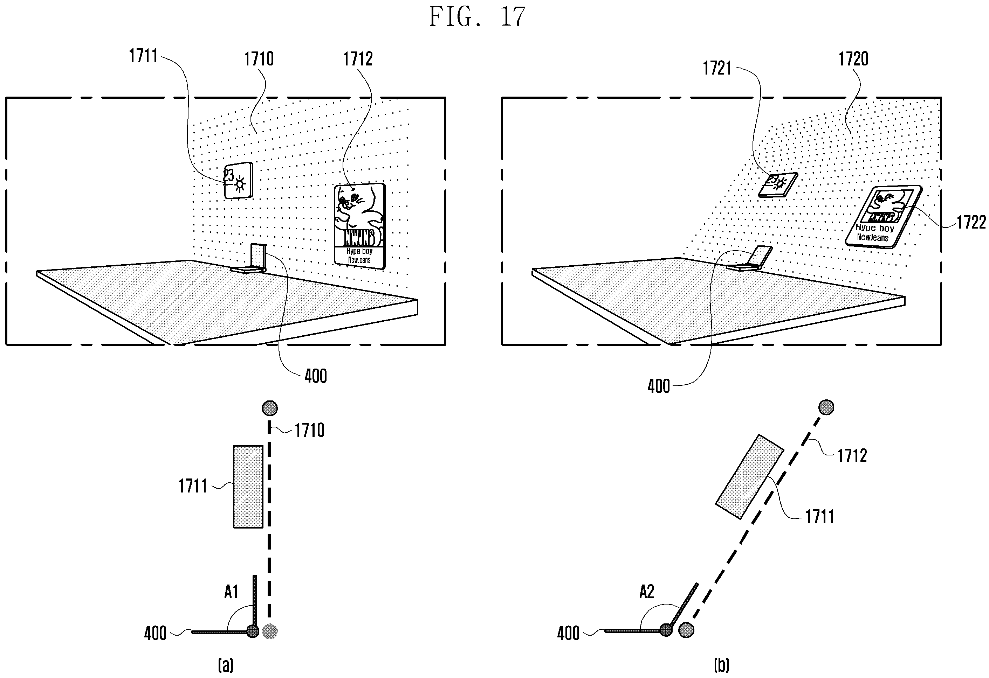

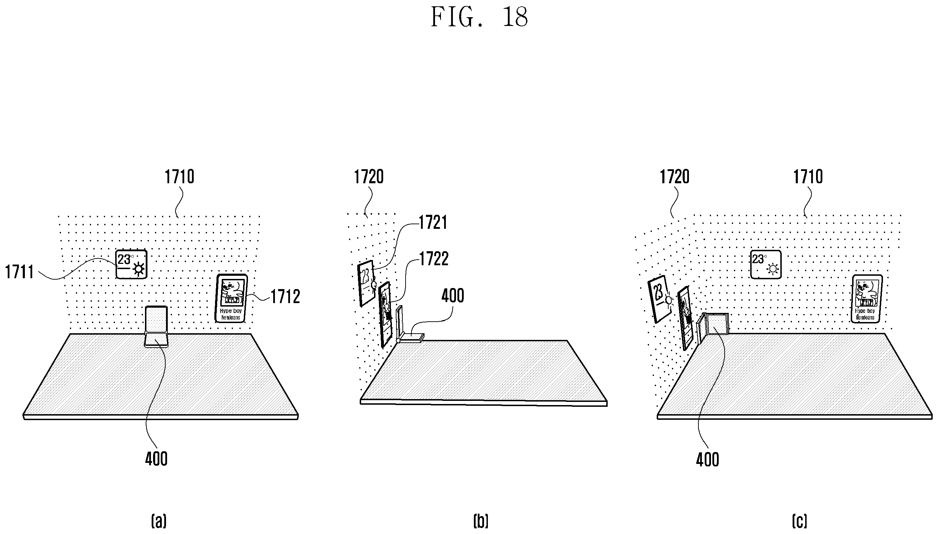

This embodiment will be described in more detail with reference to FIGS. 17 and 18.

Instructions for performing the operations of the wearable device 300 (or the processor 350) described above may be stored on a computer-readable recording medium. The recording medium may be tangible and non-transitory. The recording medium may store one or more computer programs including the instructions.

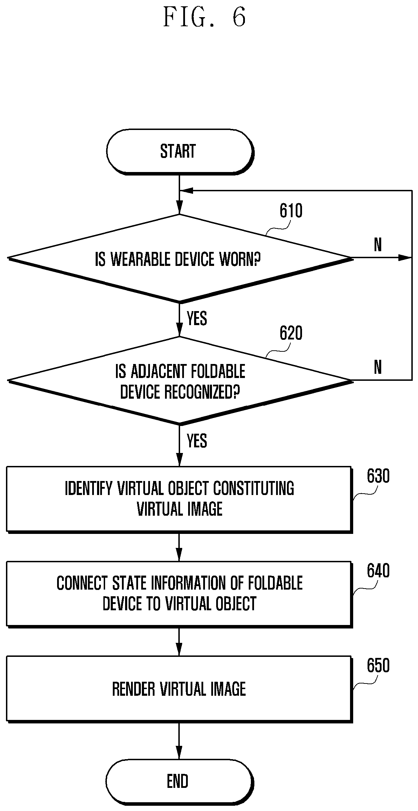

FIG. 6 is a flowchart illustrating a method for rendering a virtual image of a wearable device according to an embodiment.

The illustrated method may be performed by a wearable device (e.g., the wearable device 300 in FIG. 5), for example, by a processor (e.g., the processor 350 in FIG. 5) of the wearable device.

According to an embodiment, in operation 610, the wearable device may identify whether the wearable device is worn on a user. For example, a wearable device may identify that the wearable device is worn on the user when contact and/or proximity to the user's body is recognized through a contact sensor and/or a proximity sensor, when movement while the wearable device is being worn on the user is detected by a motion sensor, and/or when the user's eyes are recognized through a camera module.

According to an embodiment, in operation 620, the wearable device may determine whether an adjacent foldable device (e.g., the foldable device 400 in FIG. 3) is recognized. For example, the wearable device may support short-range wireless communication (e.g., Bluetooth or Wi-Fi) using a communication module (e.g., the communication module 330 in FIG. 5) and recognize the foldable device, based on a short-range wireless communication signal transmitted from the foldable device. Alternatively, the wearable device may acquire front image information corresponding to the user's gaze direction (or field of view) through a camera module (e.g., the camera module 320 in FIG. 5) and recognize an adjacent foldable device through object recognition from the acquired image.

According to an embodiment, in operation 630, the wearable device may identify at least one virtual object constituting a virtual image. For example, the wearable device may determine a virtual environment (e.g., the virtual workspace in FIG. 4) to be provided when the wearable device is worn, based on default settings or a user's selection, and identify at least one virtual object to be provided in the virtual image implementing the virtual environment. The virtual objects may include images having the shapes of real objects, widgets (e.g., weather, calendar, and clock), avatars, etc., but their types are not limited. The virtual objects to be provided through the virtual image may be predetermined based on default settings or a user's selection, and new virtual objects may be added and/or existing virtual objects may be removed based on a user's selection while the virtual image is displayed.

According to an embodiment, in operation 640, the wearable device may associate status information of the foldable device with the virtual objects. Here, the status information may include location information of the foldable device and/or folding angle information of the foldable device. For example, the wearable device may recognize the current location of the foldable device and determine a position to render the virtual object, based on the recognized location. In addition, the wearable device may determine visual characteristics (e.g., size, distance, and angle) of at least one virtual object, based on folding angle information received from the foldable device.

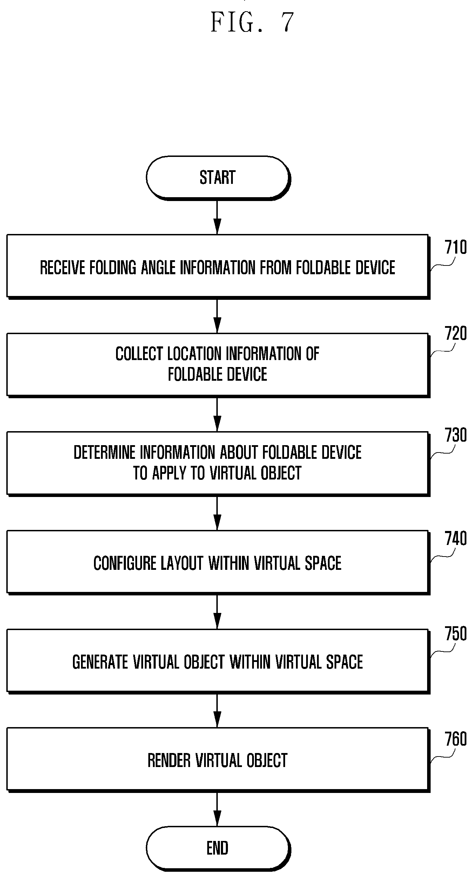

The details of operation 640 of associating the status information of the foldable device with the virtual object will be described in more detail with reference to FIG. 7.

According to an embodiment, in operation 650, the wearable device may render the virtual image including the virtual objects. The wearable device may render the virtual image by reflecting the visual characteristics of the virtual objects determined based on the status information of the foldable device so as to be recognized by the user's gaze.

FIG. 7 is a flowchart illustrating a method for configuring a virtual image using information about a foldable device by a wearable device according to an embodiment.

The illustrated method may be performed by a wearable device (e.g., the wearable device 300 in FIG. 5), for example, by a processor (e.g., the processor 350 in FIG. 5) of the wearable device. FIG. 7 may include details of operation 640 of associating the status information of the foldable device and with virtual objects in FIG. 6.

According to an embodiment, in operation 710, the wearable device may receive, from a foldable device (e.g., the foldable device 400 in FIG. 3), folding angle information of the foldable device. For example, the foldable device may include a flexible display including a first area and a second area, which are divided based on a folding axis, and an angle sensor that senses the angle between the first area and the second area and/or the angle between a first housing including the first area and a second housing including the second area. The foldable device may transmit folding angle information sensed using the angle sensor to the wearable device via short-range wireless communication. The foldable device may transmit the folding angle information to the wearable device in real time (or in a configured cycle), or may transmit the folding angle information upon initial connection and then, when the folding angle changes beyond a reference value, transmit the changed folding angle information to the wearable device.

According to an embodiment, in operation 720, the wearable device may collect location information of the foldable device. For example, the wearable device may identify the location of the foldable device through object recognition from the signal received from the foldable device via short-range wireless communication and/or an image acquired via a camera module (e.g., the camera module 320 in FIG. 5).

According to an embodiment, in operation 730, the wearable device may determine information about the foldable device to apply to the virtual object. For example, the wearable device may determine visual characteristics, such as the position where the virtual object is disposed on the virtual image, the size of the virtual object, and the angle thereof, based on the folding angle information and/or location information received from the foldable device.

According to an embodiment, in operation 740, the wearable device may configure a layout including various virtual objects within a virtual space. According to an embodiment, the wearable device may configure a layout to be used for arranging virtual objects depending on the virtual image or the type of virtual object included in the virtual image. For example, when the virtual object is a 2D object, the wearable device may arrange the respective virtual objects on the x, y, and z coordinates in a rectangular coordinate system, and may move the virtual objects in a direction in which any one of the x, y, and z values increases or decreases according to a change in the folding angle of the foldable device. According to an embodiment, when the virtual image including the virtual objects provides a panoramic 3D environment, the wearable device may arrange the respective virtual objects, based on a cylindrical coordinate system, and when the virtual image provides a VR environment, the wearable device may arrange the respective virtual objects, based on a spherical coordinate system. According to an embodiment, the wearable device may use a rectangular coordinate system or a spherical coordinate system, and match the folding angle of the foldable device with variables (x, y, z) constituting the rectangular coordinate system or variables (r, φ, θ) constituting the spherical coordinate system. When the folding angle of the foldable device changes, at least one of the coordinate values (x, y, z) of the virtual object may change in the state where the rectangular coordinate system is configured, and at least one of the coordinate values (r, φ, θ) of the virtual object may change in the state where the spherical coordinate system is configured.

According to an embodiment, in operation 750, the wearable device may generate at least one virtual object to be disposed within the virtual space. The virtual object to be provided within the virtual image may be predetermined, and the wearable device may determine the visual characteristics of the predetermined virtual object, based on folding angle information and/or location information of the foldable device.

According to an embodiment, in operation 760, the wearable device may render the virtual object. The wearable device may render the virtual object according to the visual characteristics determined based on the folding angle information and/or location information of the foldable device so as to be recognized by the user's gaze.

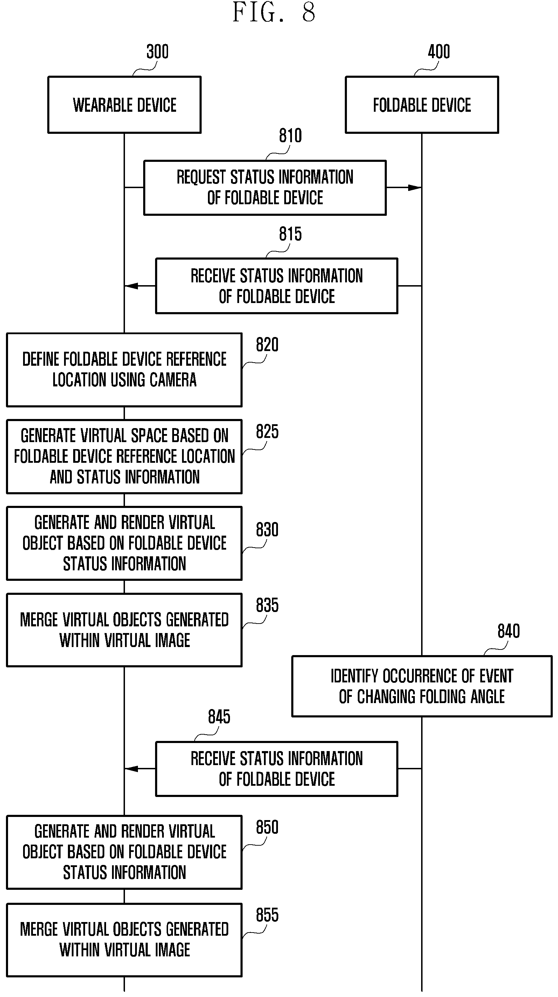

FIG. 8 is a flowchart illustrating a method for providing a virtual image of a wearable device and a foldable device according to an embodiment.

According to an embodiment, in operation 810, a wearable device (e.g., the wearable device 300 in FIG. 5) may request status information of a foldable device from the foldable device. For example, the wearable device may connect to the foldable device via short-range wireless communication (e.g., Bluetooth or Wi-Fi) and request the status information from the foldable device. The status information may include folding angle information of the foldable device.

According to an embodiment, in operation 815, the foldable device may transmit status information of the foldable device to the wearable device in response to the request from the wearable device. The foldable device may include an angle sensor and may transmit folding angle information identified through the angle sensor to the wearable device.

According to an embodiment, in operation 820, the wearable device may define a reference location of the foldable device using a camera module (e.g., the camera module 320 in FIG. 3). For example, the wearable device may recognize the foldable device from a real front image acquired using the camera module (or front camera) and define the recognized location of the foldable device as a reference location for anchoring virtual objects included in the virtual image.

According to an embodiment, in operation 825, the wearable device may generate a virtual space, based on the reference location and status information of the foldable device. For example, the wearable device may anchor at least one virtual object constituting the virtual image to be adjacent to the recognized foldable device.

According to an embodiment, in operation 830, the wearable device may generate and render respective virtual objects, based on the status information of the foldable device. For example, the wearable device may determine visual characteristics (e.g., angle, distance, and position) of the virtual object, based on the folding angle information of the foldable device.

According to an embodiment, in operation 835, the wearable device may merge one or more virtual objects generated within the virtual image. For example, the wearable device may merge one or more generated virtual objects to configure a virtual image and render the virtual image.

According to an embodiment, in operation 840, the foldable device may identify the occurrence of an event of changing the folding angle according to a user's manipulation.

According to an embodiment, in operation 845, the foldable device may transmit status information of the foldable device to the wearable device in response to the occurrence of the event. The foldable device may include an angle sensor that detects the folding angle and, when a change in the folding angle is detected by the angle sensor, transmit the changed folding angle information to the wearable device via short-range wireless communication.

According to an embodiment, in operation 850, the wearable device may generate and render the virtual object, based on the received status information of the foldable device. For example, the wearable device may change the visual characteristics (e.g., angle, distance, and position) of the virtual object according to the folding angle and render the virtual image including the virtual object with the changed visual characteristics.

According to an embodiment, in operation 855, the wearable device may merge one or more virtual objects generated within the virtual image.

FIG. 9 illustrates an example of a wearable device controlling the angle of a virtual image in accordance with the folding angle of a foldable device according to an embodiment.

In FIG. 9, the foldable device 400 is one existing in a real environment, and the virtual object is an image output by a display module (e.g., the display module 310 in FIG. 5) of a wearable device (e.g., the wearable device 300 in FIG. 5) and may be recognized to be adjacent to (or overlaid onto) the foldable device 400 in the real environment in the user's field of view.

According to an embodiment, the wearable device (e.g., the processor 350 in FIG. 5) may determine the angle at which at least one of the virtual objects included in the virtual image is displayed based on the folding angle of the foldable device 400. Here, the folding angle may be the angle between the first area 411 and the second area 412 of the flexible display, and the foldable device 400 may sense the folding angle using an angle sensor and transmit it to the wearable device.

According to an embodiment, the wearable device may maintain the angle of the virtual object without changing it when the folding angle of the foldable device 400 falls within a first angle range (e.g., 0 to 90 degrees), and may maintain the angle of the virtual object as when the foldable device 400 is in a fully folded state or is being held by the user's hand. The wearable device may change the angle of the virtual object in response to a change in the folding angle when the folding angle falls within a second angle range (e.g., 90 to 180 degrees). Here, examples of the first and second angle ranges are not limited thereto.

Referring to FIG. 9, when the folding angle of the foldable device 400 is 0 degrees, i.e., in a fully folded state, the wearable device may dispose a virtual object 910 so that it is perpendicular to the user's gaze direction. When the folding angle of the foldable device 400 increases according to the user's manipulation, the angle of the virtual object 910 may be maintained until the folding angle reaches 90 degrees, which is within the first angle range. When the folding angle of the foldable device 400 further increases to A2, which is within the second angle range, the wearable device may change the angle of a virtual object 920 so that it appears tilted by A2, which is equal to the folding angle, relative to the user's gaze direction. When the folding angle of the foldable device 400 further increases to A3, which is close to 180 degrees, the wearable device may change the angle of the virtual object 930 so that it appears tilted by A3.

Accordingly, the user may dispose the virtual object at a desired angle within the virtual image by manipulating the folding angle of the foldable device 400.

FIG. 10 illustrates an example of a wearable device controlling the size of a virtual image in accordance with the folding angle of a foldable device according to an embodiment.

In FIG. 10, the foldable device 400 is one existing in a real environment, and the virtual object is an image output by the display module of the wearable device, and may be recognized as being adjacent to (or overlaid onto) the foldable device 400 in the real environment in the user's field of view.

According to an embodiment, the wearable device (e.g., the processor 350 in FIG. 5) may determine the size of at least one of the virtual objects included in a virtual image, based on the folding angle of the foldable device 400. The wearable device may increase or decrease the size of the virtual object in real time as the folding angle of the foldable device 400 changes due to a user's manipulation.

Referring to FIG. 10, when the foldable device 400 is in a fully folded state, the wearable device may determine the size of the virtual object as a first size and render a virtual object 1010 of the first size. When the folding angle of the foldable device 400 increases to A2 due to a user's manipulation, the wearable device may gradually increase the size of the virtual object 1020 from the first size to the second size in response to the increase in the folding angle. When the user manipulates the foldable device 400 to increase its folding angle to A3 and enter a fully unfolded state, the wearable device may gradually increase the size of the virtual object 1030 to a third size, which is larger than the second size.

FIG. 11 illustrates an example of a wearable device controlling the distance of a virtual image in accordance with the folding angle of a foldable device according to an embodiment.

In FIG. 11, the foldable device 400 is one existing in a real environment, and the virtual object is an image output by the display module (e.g., the display module 310 in FIG. 5) of the wearable device 300 and may be recognized as being adjacent to (or overlaid onto) the foldable device 400 in the real environment in the user's field of view.

According to an embodiment, the wearable device 300 (e.g., the processor 350 in FIG. 5) may determine the distance of at least one of the virtual objects included in the virtual image, based on the folding angle of the foldable device 400. When the distance of the virtual object is determined, the wearable device 300 may render the virtual object so that the virtual object is recognized as being located at the determined distance from the user's gaze.

Referring to FIG. 11, the wearable device 300 may place the virtual object 1110 at a predetermined position when the foldable device 400 is in a fully folded state. For example, the position of the virtual object may be determined as a position adjacent to the upper end of the flexible display of the foldable device 400. When the folding angle of the foldable device 400 increases from A2 to A3, to A4, and to A5 due to a user's manipulation, the wearable device 300 may cause the position of the virtual object (e.g., 1120 → 1130 → 1140 → 1150) to move away from the user in response to the increase in the folding angle. The wearable device 300 may render a virtual object so that the user the virtual object may be recognized as being located at a distance determined by the folding angle.

FIG. 12 illustrates an example of a wearable device configuring the position coordinates of a virtual object in accordance with the folding angle of a foldable device according to an embodiment.

According to an embodiment, a wearable device (e.g., the wearable device 300 in FIG. 5) may configure a coordinate system that defines the position of a virtual object within virtual space. For example, the coordinate system may be a rectangular coordinate system or a spherical coordinate system, and may include the folding angle of the foldable device 400 and variables (x, y, z) that constitute the rectangular coordinate system or variables (r, φ, θ) that constitute the spherical coordinate system. The processor may use the rectangular coordinate system or the spherical coordinate system depending on the folding angle range of the foldable device 400.

According to an embodiment, when the folding angle of the foldable device 400 falls within a first angle range, the wearable device may determine the position of a virtual object in the rectangular coordinate system in response to the folding angle. Here, the first angle range may be 0 to 90 degrees, but is not limited thereto.

Referring to FIG. 12A, when the foldable device 400 is in a fully folded state, the wearable device may generate a virtual object 1210 and display it adjacent to the foldable device 400. For example, the wearable device may display the virtual object in the z-direction of the foldable device 400. When the folding angle increases to A2, which is within the first angle range, according to a user's manipulation, the wearable device may move the position of the virtual object 1220 in the z-direction and increase the size of the virtual object in response to the folding angle. When the folding angle increases to A3 according to the user's manipulation, the wearable device may move the position of the virtual object 1230 in the z-direction and increase the size of the virtual object in response to the folding angle.

According to an embodiment, when the folding angle of the foldable device 400 falls within a second angle range, the wearable device may determine the position of the virtual object in the spherical coordinate system in response to the folding angle. Here, the second angle range may be 90 to 180 degrees, but is not limited thereto. When the folding angle changes within the second angle range, the processor may move the virtual object in a predetermined curved direction within the virtual image in response to the change in the folding angle.

Referring to FIG. 12B, when the folding angle is A4, which is within the second angle range, the wearable device may cause the virtual object to be disposed along a circle centered on the folding axis of the foldable device 400. When the folding angle increases to A5 according to the user's manipulation, the wearable device may move the virtual object's position further along the circle and increase the size of the virtual object in response to the folding angle.

Although this document describes the wearable device determining the position coordinates of a virtual object using the rectangular coordinate system (e.g., FIG. 12A) and the spherical coordinate system (e.g., FIG. 12B), the wearable device may also use other coordinate systems, such as a cylindrical coordinate system.

FIG. 13 is a flowchart illustrating a method for a wearable device to determine a virtual object to be controlled according to an embodiment.

The illustrated method may be performed by a wearable device (e.g., the wearable device 300 in FIG. 5), for example, by a processor (e.g., the processor 350 in FIG. 5) of the wearable device.

According to an embodiment, in operation 1310, the wearable device may determine whether the wearable device is worn on the user.

According to an embodiment, when the wearable device is identified to be in a worn state, the wearable device may recognize an adjacent foldable device and attempt to connect with the foldable device. When the wearable device is a device that provides augmented reality (AR) ("AR" in 1315), in operation 1320, the wearable device may recognize the foldable device through object recognition from an image acquired by a camera. Alternatively, when the wearable device is a device that provides virtual reality (VR) ("VR" in 1315), in operation 1325, the wearable device may recognize the foldable device, based on a short-range wireless communication signal transmitted from the foldable device.

According to an embodiment, in operation 1330, the wearable device may determine whether there is a virtual object provided through a virtual image. For example, based on default settings or a user's selection, the wearable device may determine a virtual environment (e.g., the virtual workspace in FIG. 4) to be provided when the wearable device is worn, and may identify at least one virtual object to be provided in the virtual image that implements the virtual environment. The virtual image may include only one virtual object, or may include two or more virtual objects.

According to an embodiment, in operation 1335, the wearable device may determine whether the number N of virtual objects in the virtual image is one. When the number of virtual objects in the virtual image is one, in operation 1340, the wearable device may automatically anchor the virtual object. For example, the wearable device may specify the position of the virtual object so that the virtual object is disposed adjacent to a specific object in the real environment. In this case, even when the user changes the gaze direction or moves to a different location, the wearable device 300 may render the virtual image so that the virtual object is displayed adjacent to the specific object in the real environment. According to an embodiment, the wearable device may provide the user with information in the form of a dialog indicating that the virtual object has been automatically anchored.

According to an embodiment, when the number of virtual objects in the virtual image is two or more, in operation 1345, the wearable device may determine whether all of the plurality of virtual objects are to be controlled. Here, whether they are to be controlled may indicate whether their visual characteristics are to be controlled in response to the manipulation of the foldable device. The wearable device may determine whether or not to control all of the plurality of virtual objects, based on the properties of the plurality of virtual objects and/or the user's selection, in response to the manipulation of the foldable device.

According to an embodiment, when all of the plurality of virtual objects are to be controlled, in operation 1350, the wearable device may anchor the plurality of virtual objects. In this case, when the folding angle of the foldable device changes, the visual characteristics (e.g., angle, size, and distance) of all of the plurality of virtual objects may change in response to the change in folding angle.

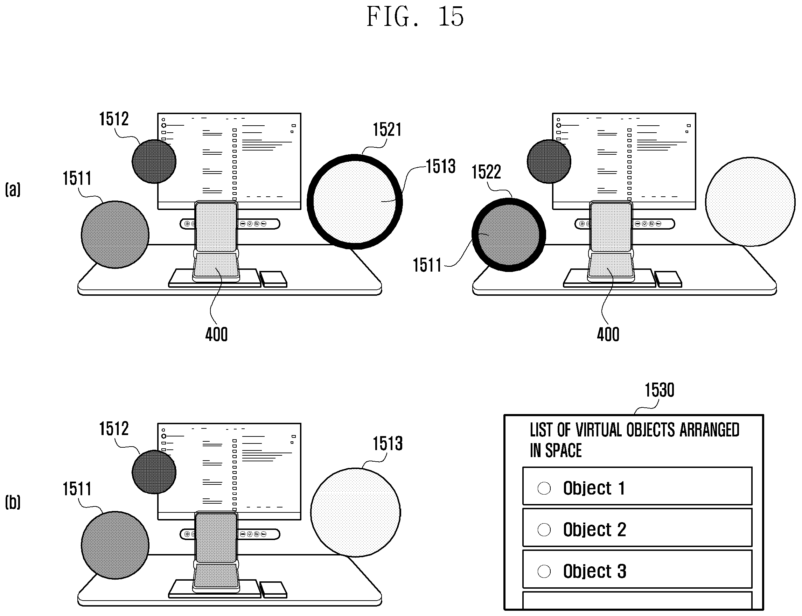

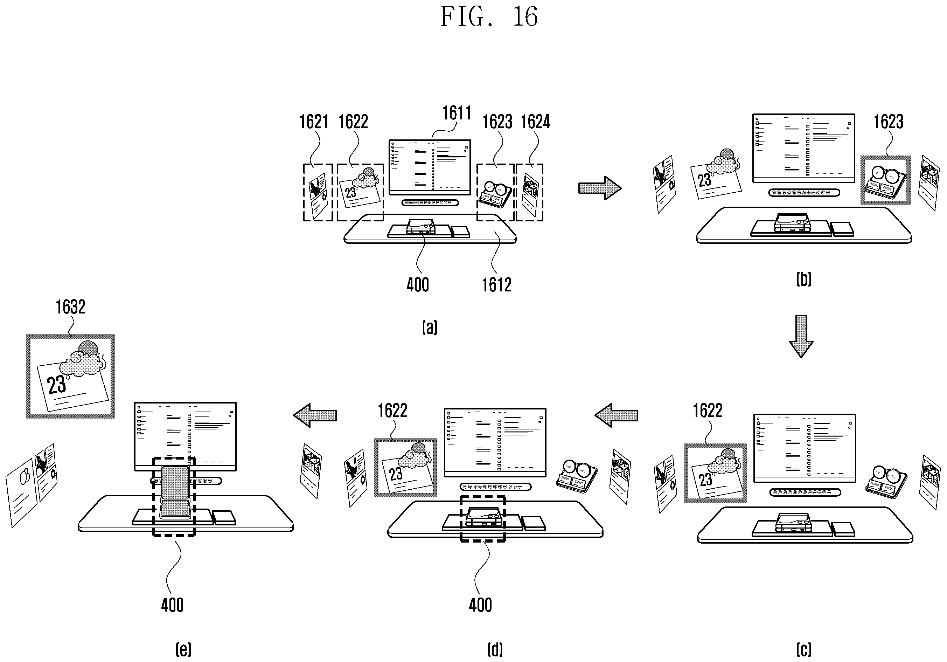

According to an embodiment, when all of the plurality of virtual objects are not to be controlled, in operation 1355, the wearable device may provide a user interface for selecting individual objects to be controlled. For example, the user interface may include an interface for selecting at least one of the plurality of virtual objects in the virtual image to be controlled in response to the manipulation of the foldable device. An example of the user interface will be described in more detail with reference to FIGS. 15 and 16.

According to an embodiment, in operation 1360, the wearable device may anchor a plurality of virtual objects. In this case, when the folding angle of the foldable device changes, the visual characteristics of at least one virtual object selected through the user interface may change in response to the change in folding angle. On the other hand, the visual characteristics of at least one unselected virtual object may be maintained regardless of the change in folding angle.

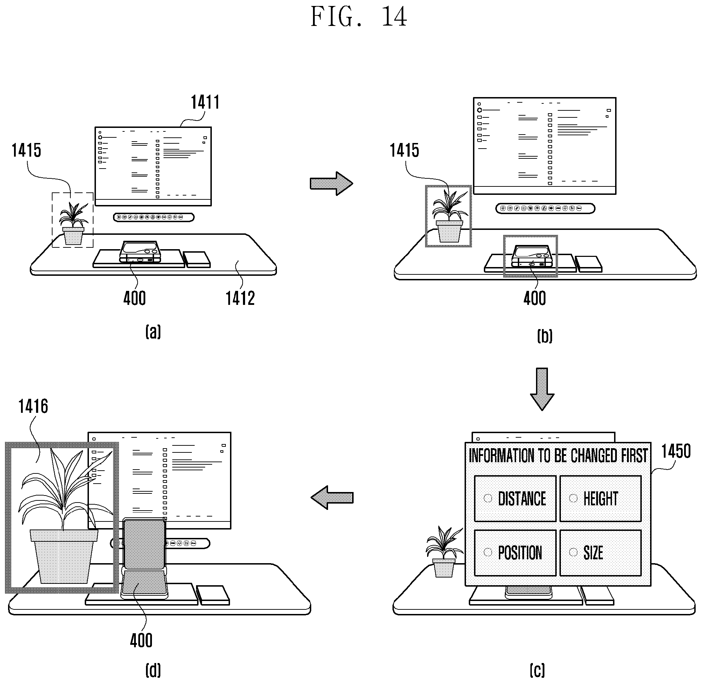

FIG. 14 illustrates an example of a wearable device controlling a virtual object in accordance with the folding angle of a foldable device according to an embodiment.

In FIG. 14, the foldable device 400 is one existing in a real environment, and a wearable device (e.g., the wearable device 300 in FIG. 5) may render a virtual image so that a virtual environment is arranged around the foldable device 400 from the user's gaze. FIG. 14 illustrates a user interface capable of determining visual characteristics to be controlled according to a folding angle when the virtual image includes a single virtual object.

According to an embodiment, the wearable device may identify a virtual object to be provided through the virtual image. Referring to FIG. 14A, the virtual image may include a UX screen 1411, a virtual desk 1412, and a single virtual object 1415. Although FIG. 14 illustrates an example in which the virtual object 1415 is a flower pot image, but the disclosure is not limited thereto.

According to an embodiment, the wearable device may recognize the location of the foldable device 400, based on object recognition from an image acquired from a camera and/or a short-range wireless communication signal transmitted from the foldable device 400, and anchor a virtual object around the foldable device 400. Referring to FIG. 14B, the virtual object 1415 may be anchored adjacent to the foldable device 400.

According to an embodiment, the wearable device may receive, from the foldable device 400, folding angle information of the foldable device 400 and change the visual characteristics of the virtual object 1415, based on the folding angle information. Here, the visual characteristics may include at least one of distance, height, position, or size.

According to an embodiment, the wearable device may provide a user interface 1450 for determining the visual characteristics to be controlled according to the folding angle of the foldable device 400. Referring to FIG. 14C, the user interface 1450 may include a menu for selecting at least one of distance, height, position, and size controllable according to the folding angle. The user may select any one of the menu items on the user interface 1450, based on changes in gaze position, hand gestures, and/or voice input.

According to an embodiment, if any one is selected from the menu items on the user interface 1450, the wearable device may change the selected visual characteristics of the virtual object when the folding angle changes. For example, when the user selects size through the user interface 1450, the size of the virtual object 1416 may be increased in response to an increase in the folding angle of the foldable device 400, as illustrated in FIG. 14D.

FIG. 15 illustrates an example of a wearable device controlling a virtual object in accordance with the folding angle of a foldable device according to an embodiment.

In FIG. 15, the foldable device 400 is one existing in a real environment, and the wearable device may render a virtual image so that a virtual environment is arranged around the foldable device 400 from the user's gaze. FIG. 15 illustrates an interface for selecting at least one virtual object whose visual characteristics are to be changed according to a folding angle when the virtual image includes a plurality of virtual objects.

According to an embodiment, the wearable device may provide a user interface for selecting at least one virtual object whose visual characteristics are to be changed according to the folding angle of the foldable device 400 when the virtual image includes a plurality of virtual objects. For example, the user interface for selecting at least one virtual object may include a selectable cue indicating a specific virtual object or a list including a plurality of virtual objects.

Referring to FIG. 15A, a virtual image may include three virtual objects 1511, 1512, and 1513. The user interface may provide cues 1521 and 1522 indicating specific virtual objects. For example, a cue 1521 indicating a third virtual object 1513 may be displayed, and in the case of changes in the user's gaze direction, a hand gesture, or a voice input, or when a predetermined period of time elapses, the virtual object indicated by the cue may be change to the first virtual object 1511 or the second virtual object 1512. If a predetermined input is received from the user while the cue 1522 is provided to the first virtual object 1511, the wearable device may select the corresponding virtual object. The wearable device may anchor the selected virtual object and provide the user with information indicating the corresponding virtual object has been selected through a dialog.

Referring to FIG. 15B, the user interface may be provided in the form of a list 1530 including a plurality of virtual objects. The user may select at least one virtual object from the list 1530 by a change in the gaze direction, a hand gesture, or a voice input. The wearable device may anchor the selected virtual object.

In this way, the wearable device may allow the user to select only at least one virtual object through the user interface, thereby removing a specific virtual object from the field of view and/or reconfiguring the layout of the virtual objects.

FIG. 16 illustrates an example of a wearable device controlling a virtual object in accordance with the folding angle of a foldable device according to an embodiment.

In FIG. 16, the foldable device 400 is one existing in a real environment, and the wearable device may render a virtual image so that a virtual environment is arranged around the foldable device 400 from the user's gaze. FIG. 16 illustrates an interface for selecting at least one virtual object whose visual characteristics are to be changed according to a folding angle when the virtual image includes a plurality of virtual objects.

According to an embodiment, a wearable device may identify a virtual object to be provided through a virtual image. Referring to FIG. 16A, the virtual image may include a UX screen 1611, a virtual desk 1612, and a plurality of virtual objects 1621, 1622, 1623, and 1624. Although the plurality of virtual objects 1621, 1622, 1623, and 1624 in FIG. 16 include, but are not limited to, a news widget, a weather widget, a clock widget, and a message widget, respectively.

According to an embodiment, the wearable device may verify that there are a plurality of virtual objects 1621, 1622, 1623, and 1624 included in the virtual image and provide a user interface for selecting at least one virtual object whose visual characteristics are to be controlled according to the folding angle of the foldable device 400 from among the plurality of virtual objects 1621, 1622, 1623, and 1624.

Referring to FIG. 16B, a cue indicating a clock widget 1623 may be displayed. Thereafter, based on user input (e.g., a change in gaze direction, a hand gesture, or a voice input), the cue may be changed to indicate a weather widget 1622, as shown in FIG. 16C. According to an embodiment, the wearable device may determine the order of virtual objects to be indicated by the cue according to the order of closest distance to the user or in the order of highest usage frequency based on the user's usage log.

Referring to FIG. 16D, when a weather widget 1622 is selected, the wearable device may anchor the selected virtual object adjacent to the foldable device 400.

According to an embodiment, the wearable device may change the visual characteristics of at least one virtual object anchored according to the user's selection, among the plurality of virtual objects, in response to a change in the folding angle of the foldable device 400. Referring to FIG. 16E, when the folding angle of the foldable device 400 increases, the wearable device may increase the size of the selected weather widget 1632 and/or move its position upward. In this case, other unselected virtual objects 1621, 1623, and 1624 may be displayed without changing their visual characteristics.

FIG. 17 illustrates an example of a wearable device controlling a grid including a virtual object in accordance with the folding angle of a foldable device according to an embodiment.

According to an embodiment, a virtual image may include a plurality of virtual objects, and the plurality of virtual objects may be arranged on one grid.

Referring to FIG. 17A, a grid 1710 in the form of a single plane may be formed to correspond to the folding angle of the foldable device 400. For example, the grid 1710 may be formed to be parallel to the first area (or the first housing including the first area) of the flexible display of the foldable device 400. The wearable device may anchor one or more virtual objects 1711 and 1712 on the grid 1710. The respective virtual objects 1711 and 1712 may be disposed parallel to each other on the grid 1710. The grid 1710 illustrated in FIG. 17 may not be displayed on the virtual image, and only one or more virtual objects 1711 and 1712 included in the grid 1710 may be displayed.

According to an embodiment, the wearable device may change the visual characteristics of a plurality of virtual objects arranged on the grid according to changes in the folding angle of the foldable device 400. Referring to FIG. 17B, when the folding angle of the foldable device 400 increases according to a user's manipulation, the angle of the grid 1720 may also be changed according to the folding angle. Accordingly, the angles of the virtual objects 1721 and 1722 disposed on the grid 1720 may also change according to the folding angle.

According to an embodiment, the foldable device 400 may serve as a reference point for the task board, allowing the user to configure an interaction area. The angle of the grid may be adjusted based on the first area of the flexible display of the foldable device 400, and the user may form the grid and adjust its angle while using the foldable device 400 in flex mode.

FIG. 18 illustrates an example of a wearable device configuring a grid including a virtual object in accordance with the orientation of a foldable device according to an embodiment.

According to an embodiment, the wearable device may determine the arrangement direction of the grid including at least one object, based on the mounting direction of the foldable device 400. For example, the foldable device 400 may be placed on the floor with one side of the housing in the state where the flexible display is partially folded, such as in flex mode, and in this case, the direction in which the flexible display faces may vary based on the user's gaze direction.

Referring to FIG. 18A, the user may position the flexible display of the foldable device 400 in the direction in which the user is looking. In this case, a grid 1710 including one or more objects 1711 and 1712 may be arranged in the front based on the user's gaze direction.

Referring to FIG. 18B, a user may position the flexible display of the foldable device 400 in a vertical direction relative to the user's viewing direction. In this case, a grid 1720 including one or more objects 1721 and 1722 may be disposed to the side based on the user's gaze direction.

Referring to FIG. 18A, the user may position one side of the housing of the foldable device 400 sideways, rather than resting it on the floor. In this case, the wearable device may position both the grid 1710 on the front and the grid 1720 on the side relative to the user's gaze direction.

An electronic device according to various embodiments of the disclosure may include a display configured to output a virtual image, a camera configured to acquire a reality image including an external subject, a communication circuit, a memory, and a processor operatively connected to the display, the camera, and the communication circuit.

According to an embodiment, the memory may store instructions that are executable by at least one processor and, when executed, cause the electronic device to recognize an external foldable device, based on at least one of a reality image including the foldable device and acquired by the camera or a signal received from the foldable device through the communication circuit.

According to an embodiment, the memory may store instructions that cause the electronic device to receive folding angle information of the foldable device from the foldable device through the communication circuit, determine visual characteristics of at least one virtual object constituting the virtual image, based on the received folding angle information, and render the virtual image including the at least one virtual object reflecting the determined visual characteristics, thereby outputting the rendered virtual image through the display.

According to an embodiment, the memory may store instructions that cause the electronic device to determine a position of the at least one virtual object within the virtual image, based on location information of the foldable device.

According to an embodiment, the memory may store instructions that cause the electronic device to change the visual characteristics of the at least one virtual object, when changed folding angle information is received from the foldable device, based on the changed folding angle information.

According to an embodiment, the visual characteristics may include at least one of a size, a position, or an angle of the virtual object.

According to an embodiment, the memory may store instructions that cause the electronic device to move, when the folding angle of the foldable device changes within a first angle range, the virtual object in a predetermined linear direction within the virtual image in response to the change in the folding angle, and move, when the folding angle of the foldable device changes within a second angle range greater than the first angle range, the virtual object in a curved direction within the virtual image in response to the change in the folding angle.

According to an embodiment, the memory may store instructions that cause the electronic device to determine the position of the virtual object in a rectangular coordinate system in response to the folding angle of the foldable device when the folding angle falls within the first angle range, and determine the position of the virtual object in a spherical coordinate system in response to the folding angle of the foldable device when the folding angle falls within the second angle range.

According to an embodiment, the memory may store instructions that cause the electronic device to change the angle of the virtual object, based on a direction perpendicular to a user's gaze direction, in response to the change in the folding angle of the foldable device.

According to an embodiment, the memory may store instructions that cause the electronic device to identify the location of the foldable device in the reality image acquired by the camera, and generate the virtual image such that the virtual object is disposed adjacent to the identified location of the foldable device.

According to an embodiment, the memory may store instructions that cause the electronic device to determine, when the virtual image includes a plurality of virtual objects, at least one of the plurality of virtual objects whose visual characteristics are to be changed according to the folding angle of the foldable device.

According to an embodiment, the memory may store instructions that cause the electronic device to provide a UI for selecting at least one of the plurality of virtual objects whose visual characteristics are to be changed according to the folding angle of the foldable device through the display.

According to an embodiment, the foldable device may include a flexible display including a first area and a second area divided based on a folding axis, and the folding angle information may include an angle between the first area and the second area.

According to an embodiment, the virtual image may implement augmented reality or virtual reality.

According to an embodiment, the virtual image may include a virtual workspace, and the virtual object may include a widget.

A method for providing a virtual image for an electronic device according to various embodiments of the disclosure may include recognizing an external foldable device, based on at least one of a reality image including the foldable device and acquired by a camera or a signal received from the foldable device, receiving folding angle information of the foldable device from the foldable device, determining visual characteristics of at least one virtual object constituting the virtual image, based on the received folding angle information, and rendering the virtual image including the at least one virtual object reflecting the determined visual characteristics and outputting the rendered virtual image.

According to an embodiment, the method may further include determining a position of the at least one virtual object within the virtual image, based on location information of the foldable device.

According to an embodiment, the method may further include changing the visual characteristics of the at least one virtual object, when changed folding angle information is received from the foldable device, based on the changed folding angle information.

According to an embodiment, the visual characteristics may include at least one of a size, a position, or an angle of the virtual object.

According to an embodiment, the determining of the visual characteristics of the at least one virtual object may include moving, when the folding angle of the foldable device changes within a first angle range, the virtual object in a predetermined linear direction within the virtual image in response to the change in the folding angle, and moving, when the folding angle of the foldable device changes within a second angle range greater than the first angle range, the virtual object in a curved direction within the virtual image in response to the change in the folding angle.

According to an embodiment, the determining of the visual characteristics of the at least one virtual object may include changing the angle of the virtual object, based on a direction perpendicular to a user's gaze direction, in response to the change in the folding angle of the foldable device.

According to an embodiment, the method may further include determining, when the virtual image includes a plurality of virtual objects, at least one of the plurality of virtual objects whose visual characteristics are to be changed according to the folding angle of the foldable device.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include codes generated by a compiler or code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store ^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in another element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device comprising:
a display configured to output a virtual image;
a camera configured to acquire a reality image comprising an external subject;
a communication circuit;
a memory; and
at least one processor operatively connected to the display, the camera, the communication circuit, and the memory,
wherein the memory is configured to store instructions that are executable by the at least one processor and, when executed, cause the electronic device to:
recognize an external foldable device, based on at least one of a reality image comprising the foldable device and acquired by the camera or a signal received from the foldable device through the communication circuit;
receive folding angle information of the foldable device from the foldable device through the communication circuit;
determine visual characteristics of at least one virtual object constituting the virtual image, based on the received folding angle information; and
render the virtual image comprising the at least one virtual object reflecting the determined visual characteristics, and output the rendered virtual image through the display.

2. The electronic device of claim 1,
wherein the memory is configured to store instructions that cause the electronic device to determine a position of the at least one virtual object within the virtual image, based on location information of the foldable device.

3. The electronic device of claim 1 or 2,
wherein the memory is configured to store instructions that cause the electronic device to change the visual characteristics of the at least one virtual object, in a case where changed folding angle information is received from the foldable device, based on the changed folding angle information.

4. The electronic device of any one of claims 1 to 3,
wherein the visual characteristics comprise at least one of a size, a position, or an angle of the virtual object.

5. The electronic device of any one of claims 1 to 4,
wherein the memory is configured to store instructions that cause the electronic device to:
move, in a case where the folding angle of the foldable device changes within a first angle range, the virtual object in a predetermined linear direction within the virtual image in response to the change in the folding angle; and
move, in a case where the folding angle of the foldable device changes within a second angle range greater than the first angle range, the virtual object in a curved direction within the virtual image in response to the change in the folding angle.

6. The electronic device of any one of claims 1 to 5,
wherein the memory is configured to store instructions that cause the electronic device to change the angle of the virtual object, based on a direction perpendicular to a user's gaze direction, in response to the change in the folding angle of the foldable device.

7. The electronic device of any one of claims 1 to 6,
wherein the memory is configured to store instructions that cause the electronic device to:
identify the location of the foldable device in the reality image acquired by the camera; and
generate the virtual image such that the virtual object is disposed adjacent to the identified location of the foldable device.

8. The electronic device of any one of claims 1 to 7,
wherein the memory is configured to store instructions that cause the electronic device to determine, in a case where the virtual image comprises a plurality of virtual objects, at least one of the plurality of virtual objects whose visual characteristics are to be changed according to the folding angle of the foldable device.

9. The electronic device of any one of claims 1 to 8,
wherein the foldable device comprises a flexible display comprising a first area and a second area divided based on a folding axis, and
wherein the folding angle information comprises an angle between the first area and the second area.

10. The electronic device of any one of claims 1 to 9,
wherein the virtual image comprises a virtual workspace, and
wherein the virtual object comprises a widget.

11. A method for providing a virtual image for an electronic device, the method comprising:
recognizing an external foldable device, based on at least one of a reality image comprising the foldable device and acquired by a camera or a signal received from the foldable device;
receiving folding angle information of the foldable device from the foldable device;
determining visual characteristics of at least one virtual object constituting the virtual image, based on the received folding angle information; and
rendering the virtual image comprising the at least one virtual object reflecting the determined visual characteristics and outputting the rendered virtual image.

12. The method of claim 11,
further comprising determining a position of the at least one virtual object within the virtual image, based on location information of the foldable device.

13. The method of claim 11 or 12,
further comprising changing the visual characteristics of the at least one virtual object, in a case where changed folding angle information is received from the foldable device, based on the changed folding angle information.

14. The method of any one of claims 11 to 13,
wherein the visual characteristics comprises at least one of a size, a position, or an angle of the virtual object.

15. The method of any one of claims 11 to 14,
wherein the determining of the visual characteristics of the at least one virtual object comprises:
moving, in a case where the folding angle of the foldable device changes within a first angle range, the virtual object in a predetermined linear direction within the virtual image in response to the change in the folding angle; and
moving, in a case where the folding angle of the foldable device changes within a second angle range greater than the first angle range, the virtual object in a curved direction within the virtual image in response to the change in the folding angle.
